Europäisches Patentamt

**European Patent Office**

**Office européen des brevets**

(11) Publication number: **0 212 576**
**A2**

(12) **EUROPEAN PATENT APPLICATION**

(21) Application number: **86111255.5**

(22) Date of filing: **14.08.86**

(51) Int. Cl.⁴: **H 02 M 7/162**

(30) Priority: **19.08.85 ZA 856275**

(43) Date of publication of application: **04.03.87**
**Bulletin 87/10**

(84) Designated Contracting States: **AT BE CH DE FR GB IT LI LU NL SE**

(71) Applicant: **Voogt, Stratford, 49 Pitout Street, Whitfield Boksburg (ZA)**
Applicant: **Zwiegelaar, Johan Hendrik, Plot 63, Kaalplaats Loch Vaal (ZA)**
Applicant: **Firma AM-Produkte AG, Pilatusstrasse 64 "Zähringerhof", CH-6002 Luzern (CH)**

(72) Inventor: **Voogt, Stratford, 49 Pitout Street, Whitfield Boksburg (ZA)**

(74) Representative: **Schöning, Hans-Werner, Dipl.-Ing. et al, RECHTSANWÄLTE Dr. Harmsen, Dr. Utescher Dipl.-Chem Harmsen, Bartholatus Dr. Schaeffer, Dr. Fricke, Wolter PATENTANWÄLTE Dr. Siewers, Dipl.-Ing. Schöning Adenaerallee 28, D-2000 Hamburg 1 (DE)**

(54) **Power generator suitable for welding and operating power tools.**

(57) The invention provides an electrical generator suitable for welding and for operating power tools, which generator comprises a pulley driven alternator (10), having three output windings (A, B, C) in a delta configuration and a pair of rectifiers (D1, D4; D2, D5; D3, D6) associated with each output winding (A, B, C), a voltage regulator (12) being supplied with rectified current from the alternator windings via the rectifiers and controlling the current supplied to the field winding (R) of the alternator (10). According to the invention there is a voltage multiplier circuit (18) which comprises a first pair of series connected capacitors (20, 22) connected across the positive and negative poles of the rectified alternator output, a first blocking diode with its cathode connected to the negative pole of the rectified alternator output and a second blocking diode with its cathode connected to the negative pole of the rectified alternator output and a second pair of series connected capacitors (28, 30) connected between the cathode and anode, respectively, of the first and second blocking diodes (24, 26), the opposite ends of one alternator output winding (C) being connected between the first and second pairs of series connected capacitors (20, 22; 28, 30).

## BACKGROUND OF THE INVENTION

This invention relates to an electrical generator suitable for welding and operating power tools.

An apparatus based on a modified motor vehicle alternator has been proposed in which the modified alternator can be switched to either provide welding current, a DC power supply, or current to charge the vehicle's battery. For example, PCT Patent Application No. PCT/AU84/00040, published under No. WO 84/03595, discloses an electrical power supply in which the output of a three-phase alternator is fed to a network of capacitors and diodes which increases the effective output voltage of the alternator to a level which is sufficient to drive electrical equipment such as power tools. In order to achieve the desired high output voltage (typically 240 Volts) a complicated circuit is employed, with a capacitor bridge circuit employing six large capacitors and eight heavy duty diodes. A DC power source, such as a vehicle battery, must be connected to the capacitor bridge. Despite its complexity, the commercially available version of this system is not entirely satisfactory.

In particular, the system struggles to achieve a sufficiently high output voltage. This problem is addressed in practice by the provision of a smaller-than-usual pulley on the alternator, which results in frequent breakage of the belt used to drive the alternator. It is also found that the system cannot safely supply loads of greater than about 3 000 Watts, so that when a heavy duty power tool such as an angle grinder is powered by the system, overheating and destruction of components in the capacitor bridge can occur.

SUMMARY OF THE INVENTION

According to the invention a power generator comprises a pulley-driven alternator having three output windings in a delta configuration and a pair of rectifiers associated with each output winding; a voltage regulator for controlling the alternator output; and a capacitive voltage multiplier circuit; the voltage regulator being supplied with rectified current from the alternator windings via the rectifiers and controlling the current supplied to the field winding of the alternator; the voltage multiplier circuit comprising a first pair of series-connected capacitors connected across the positive and negative poles of the rectified alternator output; a first blocking diode with its anode connected to the positive pole of the rectified alternator output and a second blocking diode with its cathode connected to the negative pole of the rectified alternator output; and a second pair of series-connected capacitors connected between the cathode and anode respectively of the first and second blocking diodes; the opposite ends of one alternator output winding being connected between the first and second pairs of series-connected capacitors.

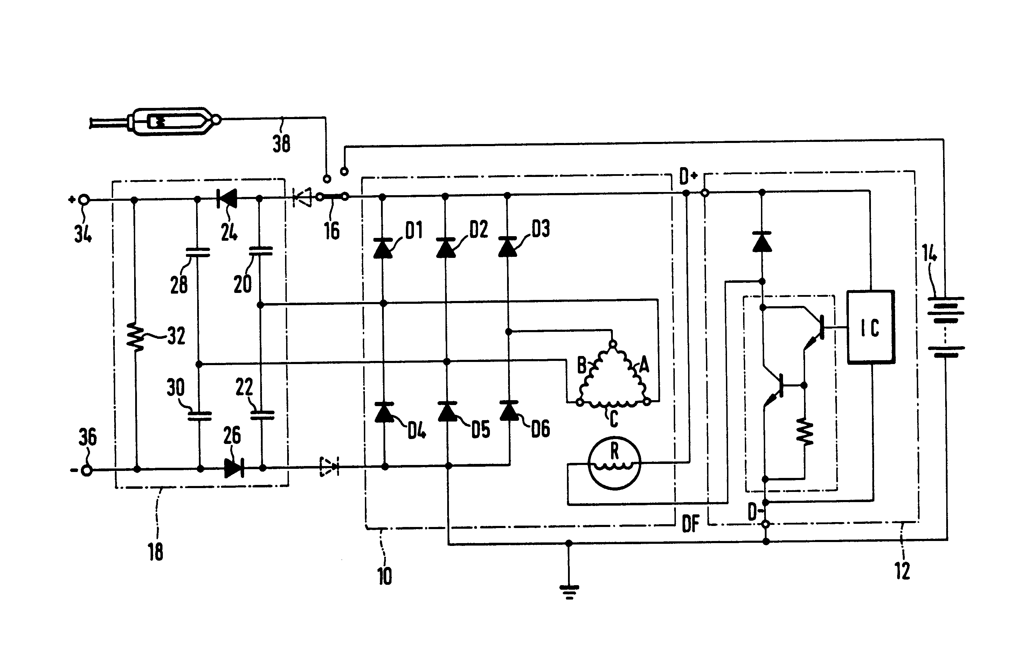

BRIEF DESCRIPTION OF THE DRAWING

The drawing is a schematic diagram of a motor engine driven power generator according to the invention.

## DESCRIPTION OF AN EMBODIMENT

Referring to the drawing, a modified motor vehicle alternator 10 has three output windings A, B and C connected in a delta configuration. The windings A, B and C are connected to a built-in rectifier arrangement comprising six diodes D1 to D6 in a bridge so as to provide a full-wave rectified DC output. The peak open-circuit AC voltage developed across each output winding when the alternator rotor R is spinning at its nominal operating speed of approximately 7 000 rpm is about 60 volts.

A voltage regulator 12 is connected across the rectifier arrangment at two terminals D+ and D-. A regulated output is fed from a terminal DF to the rotor R of the alternator, which controls the output of the alternator. A standard 12 volt battery 14 is also connected across the rectifier arrangement and is charged by the rectified current from the windings A, B and C when a switch 16 is in the topmost position in the drawing. This position corresponds to the normal operating mode of the vehicle to which the alternator 10 is fitted. The switch 16 has two other positions, in which it selects either a welding circuit 38 or a voltage multiplier circuit 18.

The voltage multiplier circuit 18 is provided to supply a nominal 20 volt DC output to power tools such as electric drills and other devices capable of utilizing direct current. The input to the voltage multiplier circuit 18 is derived both from the output of the diode bridge arrangement and directly from the output windings of the alternator 10. The voltage multiplier circuit 18 comprises a first pair of series-connected capacitors 20, 22, a pair of diodes 24 and 26, and a second series-connected pair of capacitors 28, 30. The capacitors 20, 22, 28 and 30 are each rated at 375 $\mu$F and 250 volts. The diodes 24 and 26 are each rated at 50 amperes and 300 volts PIV. The anode of the diode 24 is conected to the positive pole of the diode bridge in the alternator 10, while the cathode of the diode 26 is connected to the negative pole of the diode bridge. A bleed resistor 32 is provided in parallel with the second series pair of capacitors 28, 30, to prevent capacitor voltages from rising too high under no-load conditions and to discharged them when the unit is off. The output of the voltage multiplier circuit appears at a positive terminal 34 and a negative terminal 36.

The two ends of the output winding B of the alternator 10 are connected to a point intermediate the capacitors 20 and 22 and the capacitors 28 and 30, respectively.

Operation of the power generator is as follows. Assuming that the switch 16 is in the position shown in the drawing, both the vehicle battery 14 and the welding output 38 are disconnected, and the voltage multiplier circuit 18 is connected. As the rotor R of the alternator 10 spins, an alternating current waveform is produced in each of the output windings A, B and C. Considering the winding A first, the nominally positive half cycle of the waveform in the winding A charges the capacitor 20 via the diode D3 to the peak voltage of the waveform. On the next, "negative", half cycle, the capacitor 22 will be charged via the diode D4 to the negative peak voltage of the waveform. Since the capacitors 20 and 22 are in series, the voltage across the series pair of capacitors 20, 22 will be double the peak voltage of the alternating current waveform in the winding A. In a similar manner, the alternating current waveform in the winding C will charge the capacitors 28 and 30 to the positive and negative peak values, respectively, of that waveform via the diodes D3, 24 and D6, 26. Thus, the pair of series connected capacitors 28, 30 is charged by the alternating current waveform in the winding B to double the peak voltage of that waveform.

During the first half cycle of the waveform in the winding B, the voltages of the waveforms in the windings C and B will be in series. This series voltage will charge the capacitor 28 via the diode 24 to effectively double the voltage across the capacitor 28. During the next half cycle of the waveform in the winding B, the capacitor 30 will be charged via the diode 26 to double the voltage across the capacitor 30. Since the capacitors 28 and 30 are connected in series, and because the voltage on each of those capacitors is double that on the capacitors 20 and 22, the total voltage across the pair of series connected capacitors 28 and 30 will be twice that across the pair of series connected capacitors 20 and 22. This voltage will be four times the peak AC alternator voltage. The higher voltage across the pair of series connected capacitors 28 and 30 is prevented from being bled back into the circuit by the blocking effect of the diodes 24 and 26.

The actual output voltage obtained at the output terminals 34 and 36 depends on the alternator characteristics, and in particular, the alternator rotor speed. The output voltage will also vary according to the value of the load connected to the output terminals 34 and 36 and the size of the capacitors 20, 22, 28 and 30.

Tests have shown that the described embodiment can deliver a satisfactorily high output voltage at a considerably lower rotor speed than prior units, and that a considerably higher current can be drawn from the system without damaging the voltage multiplier circuit 18. A further advantage of the illustrated circuit over prior units is that two or more of the power generators can be connected in parallel to increase the available output current. This is not possible with the known prior devices. The described circuit is both simpler and less expensive to construct than prior circuits, due to its low component count.

With the switch 16 set to its central position as shown in the diagram, the output of the alternator bridge is connected directly to the welding circuit 38. The welding current available depends on the alternator characteristics and the alternator rotor speed. To avoid the necessity of placing a heavy duty switch in the current path of the welding circuit, the switch 16 may be omitted, and a second pair of blocking diodes (shown in dotted outline) may be placed in series between the respective positive and negative poles of the alternator output and the voltage multiplier circuit 18. This prevents excessive current from being drawn through the capacitors 20 and 22 when welding is in progress.

CLAIMS

1. A power generator comprising a pulley-driven alternator having three output windings in a delta configuration and a pair of rectifiers associated with each output winding; a voltage regulator for controlling the alternator output; and a capacitive voltage multiplier circuit; the voltage regulator being supplied with rectified current from the alternator windings via the rectifiers and controlling the current supplied to the field winding of the alternator; characterised in that the voltage multiplier circuit comprises a first pair of series-connected capacitors connected across the positive and negative poles of the rectified alternator output; a first blocking diode with its anode connected to the positive pole of the rectified alternator output and a second blocking diode with its cathode connected to the negative pole of the rectified alternator output; and a second pair of series-connected capacitors connected between the cathode and anode respectively of the first and second blocking diodes; the opposite ends of one alternator output winding being connected intermediate the respective capacitors of the ·first and second pairs of series-connected capacitors.

2. A power generator according to claim 1 characterised in that it includes means to connect the rectified alternator output selectively to the voltage multiplier circuit, a welding circuit or a battery.

3. A power generator according to claim 2 characterised in that the means comprises a switch.

4. A power generator according to claim 2 or claim 3 characterised in that the means includes blocking diodes between the rectified alternator output and the voltage multiplier circuit.

5. A power generator according to any one of claims 1 to 4 characterised in that the alternator is a motor vehicle alternator.